Europäisches Patentamt

European Patent Office

Office européen des brevets

(11) Publication number: **0 086 319**
**B1**

## (12) EUROPEAN PATENT SPECIFICATION

(45) Date of publication of patent specification: 03.02.88

(51) Int. Cl.⁴: **A 23 G 3/20, A 23 G 3/00**

(21) Application number: 82830309.9

(22) Date of filing: 27.12.82

(54) Filled sweets with wafer shell and process for their production.

(30) Priority: 30.12.81 IT 6872481

(43) Date of publication of application:
24.08.83 Bulletin 83/34

(45) Publication of the grant of the patent:
03.02.88 Bulletin 88/05

(84) Designated Contracting States:
BE DE FR GB LU NL

(56) References cited:
CH-A- 521 718
DE-B-1 169 270
FR-A- 463 832
FR-A-1 203 203
FR-A-2 254 279
FR-A-2 285 078
FR-A-2 472 346
GB-A- 416 970
US-A-1 382 601
US-A-1 383 290
US-A-1 809 383
US-A-3 574 639

(73) Proprietor: Ferrero S.p.A.
Piazzale Pietro Ferrero 1
I-12051 Alba (Cuneo) (IT)

(72) Inventor: Cillario, Lorenzo
Via F.lli Bandiera 3
I-12051 Alba (Cuneo) (IT)

(74) Representative: Bosotti, Luciano et al
c/o Jacobacci-Casetta & Perani S.p.A. Via Alfieri,
17
I-10121 Torino (IT)

Courier Press, Leamington Spa, England.

## Description

The present invention relates to a confectionery product which comprises a filling contained by two wafer half-shells which together form a shell with a closed cavity, and is coated with chocolate.

In known products of this type, which are in the form of a small bar, the filling has a consistency such that, at ambient temperature (18 to 20°C), it is pasty to semi-hard or hard and serves to join the two half-shells together not only in the finished product but also, and above all, before and during the enrobing with chocolate. On being eaten, these products stick in the mouth and therefore are not generally so enjoyable.

US—A—1809383 discloses a confectionery product of the above mentioned type in which the half-shells are joined together by the accumulation of the coating chocolate on a marginal edge of the half-shells.

GB—A—416970 discloses hollow Easter eggs consisting of two half-shells of wafer biscuit which are coated with chocolate and joined together by means of an edible gum, an adhesive or chocolate.

The object of the present invention is to provide a product of the aforesaid type which is crunchy and at the same time pleasantly "fluid" in the mouth. Further objects and advantages will become evident from the following description.

The confectionery product according to the invention, which has a filling contained by two concave wafer half-shells together forming a shell with a closed cavity, and is coated with chocolate, is characterised essentially in that said half-shells are unflanged and the mating edges of the two half-shells are joined together at points or continuously by a deposit of molten chocolate which is normally solid, the filling having a creamy semi-fluid consistency at ambient temperature, having a water content of not more than 2% by weight and a vegetable oil content of from 30 to 40% by weight, and being in direct contact with the half-shells.

The term "creamy consistency" used here means that the filling would not keep its own shape indefinitely without being confined with the shell, unlike the "pasty consistency". The filling is given this consistency by a suitable percentage of one or more vegetable oils.

Preferably, the product according to the invention is of substantially spherical shape and has a diameter of the order of 2.5 to 3 cms so that it can be eaten in a single mouthful. Furthermore, the chocolate coating may be made more interesting from the aspects of both appearance and flavour by the incorporation therein of pieces (granules) or flakes of certain natural products, such as hazelnuts, walnuts, coconut, almonds and the like. Moreover, a solid edible centre, for example, a nut or a small candied fruit, may be put in the centre of the filling.

In the appended drawings:

Figure 1 is an axial section of a product of spherical shape;

Figure 2 is a parallel section taken on the line II—II of Figure 1, and

Figure 3 is a partial perspective view illustrating the product in a stage of manufacture.

The product illustrated comprises two hemispherical half-shells 1, 1' of wafer, the edges of which mate in the equatorial plane to form a closed spherical shell. Before closure, a mass of creamy filling 2, 2' is deposited in each of the two half-shells. Generally, the two masses 2, 2' are of identical composition, but they may have different compositions. However, together they form a single filling in the centre of which is shown a hazelnut 4. The two half-shells are joined together by discrete deposits 5 of molten chocolate which is normally solid. In the chocolate coating 6 are incorporated pieces 7 of hazelnut. The thickness of the coating 6 and the half-shells 1, 1' are exaggerated in the illustration for clarity of representation.

The masses of filling 2, 2' may, for example, have the following composition by weight:

| | |
|---|---|
| sugar | 40—50% |
| hazelnut paste | 10—15% |
| cocoa | about 5% |
| powdered milk | 2—10% |
| vegetable oil | 30—40% |
| soya lecithin and flavouring | q.s. |

The ingredients are ground together until a homogeneous semi-fluid cream is obtained.

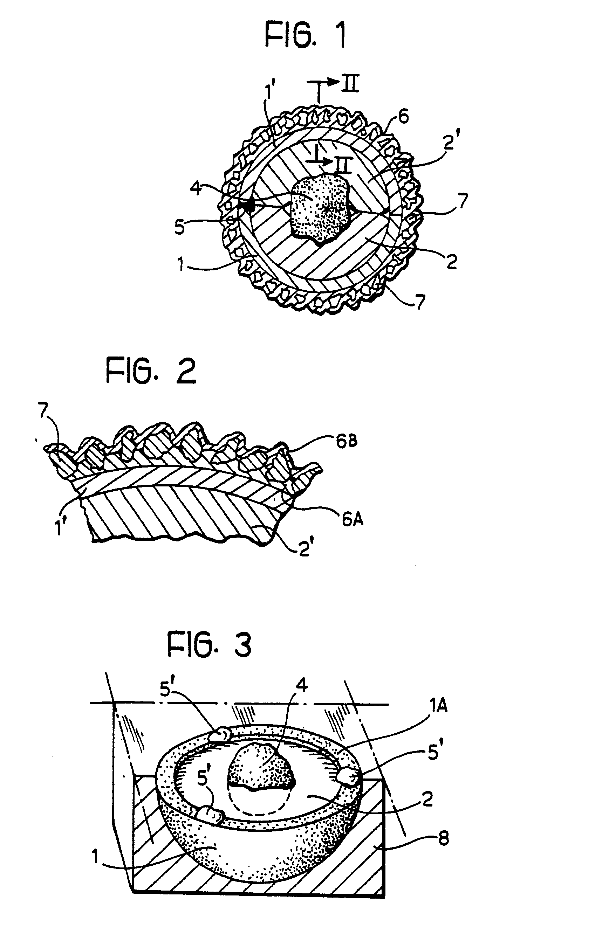

In the manufacturing process, arrays of half-shells 1 are placed in corresponding cells of a plate-shaped mould and identical arrays of half-shells 1' are placed in another plate mould. Figure 3 illustrated a half-shell 1 in its mould 8. The half-shells are then filled with their respective masses of filling, for example, by means of volumetric metering, and the hazelnuts 4 are inserted in the half-shells in one of the moulds. Subsequently, spots 5' of molten chocolate which serve as the joining material are deposited at evenly spaced points around the circular edges 1A of the half-shells in one of the moulds (half-shell 1 in Figure 3), after which the two moulds are closed like a book in register with each other so that the spots 5' are squeezed between the mating edges of the respective half-shells to effect joining. If desired, a continuous ring of molten chocolate may be deposited on the edge 1A instead of the spots 5' so as to form a continuous join rather than points of joining.

In the stage immediately after the manufacturing process, the two moulds which are closed like a book are cooled to below ambient temperature, typically to about 10°C, to set the join and thicken the consistency of the filling 2, 2', after which the moulds are opened and the half-products in the form of closed wafer spheres are taken from the moulds and subsequently moved on to be quickly enrobed with molten chocolate and then immediately sprinkled with granules of hazelnut or the like. There is thus obtained on each sphere a first coating layer of chocolate, indicated 6A in Figure 2, in which granules 7 of hazelnut are fixed. In order to set this coating, a brief cooling in a current of air is necessary after which a final enrobing with molten chocolate is carried out to form a second coating layer 6B which covers the granules 7 (Figure 2). The two layers 6A, 6B together form the coating indicated 6 in Figure 1. After a final cooling, for example, at 10°C, the product is passed on for packaging.

The product according to the invention can be kept for several months at a temperature which, of course, does not cause melting or unacceptable softening of the coating 6. The wafer shell 1, 1' always stays crisp and, because of this and the fluidity of the filling 2, 2', results in a pleasant palletability for the consumer. With regard to the industrial manufacturing process, in particular the stages of removal from the moulds and enrobing, the two half-shells stay securely joined together in their initial register with each other, by virtue of the three or four points 5 of joining. Their consistency is not prejudiced in the enrobing stage mainly because the wafer shell has an insulating effect against the heat of the molten enrobing chocolate.

## Claims

1. Confectionery product having a mouthful size which comprises a filling contained by two wafer half-shells together forming a shell with a closed cavity and is coated with chocolate, characterised in that said half-shells are unflanged and the mating edges of the two half-shells are joined together at points or continuously by a deposit of chocolate which is normally solid, the filling having a creamy semi-fluid consistency at ambient temperature, having a water content of not more than 2% by weight, and a vegetable oil content of from 30 to 40% by weight, and being in direct contact with the half-shells.

2. Product according to Claim 1, having a substantially spherical shape, preferably with a diameter of the order of 2.5 to 3 cms.

3. Product according to Claim 1 or Claim 2, in which the chocolate coating includes pieces or flakes of hazelnuts, walnuts, coconut, almonds or the like.

4. Product according to Claim 1, 2 or 3, in which the filling encloses a solid edible centre, preferably a hazelnut or candied fruit.

5. Process for the manufacture of the product according to any one of the preceding claims, in which, before enrobing, the edges of the two half-shells are joined together by the interpositioning of molten chocolate which is normally solid.

6. Process according to Claim 5, in which the half-product to be enrobed, comprising the two united half-shells, is cooled to below ambient temperatures preferably to about 10°C.

## Patentansprüche

1. Konfektionäres Produkt mundgerechter Größe, das eine Füllung umfaßt, die von zwei Waffelhalbschalen aufgenommen ist, die zusammen eine Schale mit einem geschlossenen Hohlraum bilden und mit Schokolade beschichtet ist, dadurch gekennzeichnet, daß die Halbschalen ohne Flansch ausgebildet sind und die zusammenpassenden Ränder der beiden Halbschalen an Punkten oder kontinuierlich durch eine Ablagerung von Schokolade miteinander verbunden sind, welche normalerweise fest ist, und daß die Füllung bei Umgebungstemperatur eine cremige, halbflüssige Konsistenz, einen Wassergehalt von nicht mehr als 2 Gew.-% und ein Pflanzenölgehalt von 30 bis 40 Gew.-% hat und in direkter Berührung mit den Halbschalen steht.

2. Produkt nach Anspruch 1, welches eine im wesentlichen sphärische Form hat, vorzugsweise mit einem Durchmesser im Bereich von 2,5 bis 3 cm.

3. Produkt nach Anspruch 1 oder 2, bei dem die Schokolagenbeschichtung Stücke oder Schuppen aus Haselnuß, Walnuß, Kokosnuß, Mandeln oder dergleichen beinhaltet.

4. Produkt nach Anspruch 1, 2 oder 3, bei dem die Füllung ein festes eßbares Zentrum einschließt, vorzugsweise ein Haselnuß oder eine kandierte Frucht.

5. Verfahren zum Herstellen des Produktes entsprechend einem der vorhergehenden Ansprüche, bei dem vor dem Einhüllen die Ränder der beiden Halbschalen durch Zwischenlegen einer geschmolzenen Schokolade, die normalerweise fest ist, miteinander verbunden werden.

6. Verfahren nach Anspruch 5, bei dem das einzuhüllende Halbprodukt, welches die beiden Halbschalen umfaßt, unterhalb der Umgebungstemperatur, vorzugsweise auf ungefähr 10°C, abgekühlt wird.

## Revendications

1. Produit de confiserie de la grosseur d'une bouchée qui comprend une garniture contenue par deux demi-coques en gaufrette formant ensemble une coque à cavité fermée et est enrobé de chocolat, caractérisé en ce que lesdites demi-coques sont exemptes de rebords et les bords appariés des deux demi-coques sont réunis l'un à l'autre par points ou de manière continue par un dépôt de chocolat qui est normalement solide, la garniture ayant une consistance semi-fluide crémeuse à température ambiante, ayant une teneur en eau de pas plus de 2 % en poids et une teneur en huile végétale de 30 à 40 % en poids, et étant en contact direct avec les demi-coques.

2. Produit selon la revendication 1, ayant une forme sensiblement sphérique, de préférence d'un diamètre de l'ordre de 2,5 à 3 cm.

3. Produit selon la revendication 1 ou 2, dans lequel l'enrobage de chocolat comporte des morceaux ou éclats de noisettes, noix, noix de coco, amandes ou analogues.

4. Produit selon la revendication 1, 2 ou 3 dans lequel la garniture renferme un centre comestible solide, de préférence noisette ou fruit confit.

5. Procédé pour la fabrication du produit selon l'une quelconque des revendications précédentes, dans lequel avant enrobage, les bords des deux demi-coques sont joints l'un à l'autre par interposition de chocolat fondu qui est normalement solide.

6. Procédé selon la revendication 5, dans lequel le semi-produit à enrober, comprenant les deux demi-coques unies, est refroidi au-dessous de la température ambiante, de préférence à environ 10°C.

0 086 319

FIG. 1

FIG. 2

FIG. 3